# EUROPEAN PATENT APPLICATION

(11) **EP 2 555 521 A1**
(43) Date of publication of application: **06.02.2013**
(21) Application number: 11176211.8
(22) Date of filing: 01.08.2011
(51) Int. Cl.: H04N 7/26, H04N 7/46, H04N 7/36

(54) **A method and system for transmitting a high resolution video stream as a low resolution video stream**

(71) Applicant: Advanced Digital Broadcast S.A., 1292 Chambesy (CH)
(72) Inventor: Paczkowski, Jacek, 65-119 Zielona Gora (PL)
(74) Representative: Pawlowski, Adam

(57) **Abstract**

A method for transmitting a high resolution video stream comprising high resolution video frames (101-107, 151-156) as low resolution video stream comprising low resolution video frames (111-117,161-166), comprising the steps of: defining a size of a region (120) for dividing the high resolution video frames (101-107, 151-156) into equally-sized adjacent regions (120), processing the high resolution video frames (101-107, 151-156) in sets (101-106, 151-154), each set containing a number of frames equal to the number of pixels within the region (120), wherein within the set (101-106, 151-154): converting the first high resolution video frame (101, 151) of the set to a first low resolution video frame (111, 161) by copying the first pixel of each region (120) to the first low resolution video frame (111, 161) to a position defined by a split function dependent on the pixel position in the high resolution video frame (101, 151) and the size of the region (120), converting the next high resolution video frame (102-106, 152-154) of the set to a next low resolution video frame (112-116, 162-164) by copying the next pixel of each region (120) to the next low resolution video frame (112-116, 162-164) to a position defined by the split function, until all high resolution video frames of the set (101-106, 151-154) are converted to low resolution video frames (111-116, 161-164); and transmitting the low resolution video stream comprising the low resolution video frames (111-117, 161-166) as a representation of the high resolution video stream comprising the high resolution video frames (101-107, 151-156).

## Description

The present invention relates to conversion of high resolution video streams to low resolution video streams.

High resolution video streams, such as video streams according to HDTV, Extreme HDTV or Ultra HDTV standards, require considerable bandwidth to be transmitted and processing power to be displayed. The quick development of television technology results in a situation in which many users have video receivers which are out-of-date with respect to the latest technology. Therefore, there exists a need for conversion of high resolution video streams to lower resolution video streams in order to allow the transmission of the video material through a transmission channel of a limited bandwidth or display of the video material by the video receivers which handle only the lower resolution video stream.

A high resolution video stream can be converted to a low resolution video stream by simply downscaling each frame. Various algorithms are known for downscaling, which utilize the concept of averaging a number of adjacent pixels of the high resolution video frame to a single pixel in the low resolution video frame. Such methods represent a lossy compression. While they allow to limit the bandwidth over which the low resolution video stream can be transmitted, large amount of data contained in the high resolution video stream is lost. The converted low resolution video stream, when upscaled and displayed on a high resolution video display, will appear roughly the same as when displayed on a low resolution video display.

The US patent US6836512 presents a method for high resolution formatting of video images and dynamically adjusting the transmission resolution of the high resolution images, which first downscales the high resolution images and encodes the downscaled images into base layer frames. Quality enhancement layer data is generated from the downscaled video images and the encoded data contained in corresponding base layer frames. The quality enhancement layer data is encoded into quality enhancement layer frames. Therefore, two types of base layer frames are generated, which are not applicable for transmission over a standard transmission medium for low resolution video stream and require a dedicated transmission channel.

The US patent US7180944 presents a low complexity spatial downscaling video transcoder, which comprises a decoder having a reduced DCT-MC unit, a DCT-domain downscaling unit, and an encoder. The decoder performs the DCT-MC operation at a reduced-resolution for P-/B-frames in an MPEG coded bit-stream. The DCT-domain downscaling unit is used for spatial downscaling in the DCT-domain. Therefore, at least some information in the downscaled signal is lost.

The aim of the present invention is to provide a conversion method which reduces the bandwidth necessary to transmit the high resolution video stream by allowing the stream to be transmitted over a low resolution video stream transmission channel and allows reconstruction of the converted low resolution video stream on a high resolution display with a higher number of details than standard downscaling methods known so far.

A method for transmitting a high resolution video stream comprising high resolution video frames as low resolution video stream comprising low resolution video frames, comprising the steps of defining a size of a region for dividing the high resolution video frames into equally-sized adjacent regions, processing the high resolution video frames in sets, each set containing a number of frames equal to the number of pixels within the region, wherein within the set: converting the first high resolution video frame of the set to a first low resolution video frame by copying the first pixel of each region to the first low resolution video frame to a position defined by a split function dependent on the pixel position in the high resolution video frame and the size of the region, converting the next high resolution video frame of the set to a next low resolution video frame by copying the next pixel of each region to the next low resolution video frame to a position defined by the split function, until all high resolution video frames of the set are converted to low resolution video frames, transmitting the low resolution video stream comprising the low resolution video frames as a representation of the high resolution video stream comprising the high resolution video frames.

Preferably, the split function defines the position of the pixel in the low resolution video frame as the coordinates of the pixel in the high resolution video frame divided by the size of the region in a given coordinate direction and rounded up.

Preferably, the split function further adds a shift value to each calculated coordinate of the pixel.

Preferably, the method further comprises the step of providing a header for the low resolution video frames, the header comprising an intra-region shift value defining the position of the pixels of the particular low resolution video frame in the regions of the high resolution video frame.

Preferably, the method further comprises the step of providing information about pixels of a moving object, whose value has changed between the high resolution video frame from which the low resolution video frame is converted and the previous high resolution video frame.

The object of the invention is also a low resolution video signal generated and/or transmitted according to the above described method.

The object of the invention is also a method for generating a high resolution video stream to be displayed from a low resolution video stream transmitted according to the method described above, comprising the steps of determining the size of the region, receiving successive low resolution video frames, generating successive high resolution video frames to be displayed by updating the contents of the previously generated high resolution video frame displayed with the contents of the currently received low resolution video frame at positions within the high resolution video frame to be displayed defined by a merge function dependent on the pixel position in the low resolution video frame and the size of the region.

Preferably, the merge function defines the position of the pixel in the high resolution video frame to be displayed as the shifted coordinates of the pixel in the low resolution video frame multiplied by the size of the region in a given coordinate direction and supplemented by an intra-region shift value.

Preferably, the intra-region shift value is read from a header of the low resolution video frame, the header defining the position of the pixels of the particular low resolution video frame in the regions of the high resolution video frame to be displayed.

Preferably, the method further comprises the step of determining whether the pixel of the low resolution video frame is a pixel of a moving object and if so, updating the contents of all pixels belonging to the region of the high resolution video frame to be displayed corresponding to the pixel of a moving object with the content of the pixel of a moving object.

The object of the invention is also a high resolution video signal generated according to the method described above.

The object of the invention is also a method for generating low resolution video frames to be displayed in a low resolution video display from a low resolution video stream transmitted according to the method described above, comprising the steps of receiving consecutive low resolution video frames, generating a low resolution video frame to be displayed comprising at least some pixels calculated as an average of corresponding pixels of previously received low resolution video frames.

Preferably, the method further comprises the step of generating a low resolution video frame to be displayed comprising at least some pixels copied directly from the received low resolution video frame for pixels marked as pixels of a moving object.

The object of the invention is also a computer program comprising program code means for performing all the steps of the method of the invention when said program is run on a computer. Another object of the invention is a computer readable medium storing computer-executable instructions performing all steps of the method of the invention when executed on a computer.

The object of the invention is also a system for transmitting a high resolution video stream comprising high resolution video frames as low resolution video stream comprising low resolution video frames, comprising a high resolution video stream decomposer configured to decompose an input high resolution video stream to high resolution video frames, a frame converter configured to: define a size of a region for dividing the high resolution video frames into equally-sized adjacent regions, process the high resolution video frames in sets, each set containing a number of frames equal to the number of pixels within the region, wherein within the set the frame converter is configured to: convert the first high resolution video frame of the set to a first low resolution video frame by copying the first pixel of each region to the first low resolution video frame to a position defined by a split function dependent on the pixel position in the high resolution video frame and the size of the region, convert the next high resolution video frame of the set to a next low resolution video frame by copying the next pixel of each region to the next low resolution video frame to a position defined by the split function, until all high resolution video frames of the set are converted to low resolution video frames ; and a low resolution video stream composer configured to combine the low resolution video frames to the low resolution video stream and to transmit the low resolution video stream over a transmission channel adapted for the low resolution video stream format.

The object of the invention is also a system for generating a high resolution video stream to be displayed from a low resolution video stream transmitted according to the invention, the system comprising a low resolution video stream decomposer configured to decompose an input low resolution video stream to low resolution video frames, a high resolution video frames generator configured to: determine the size of the region, generate successive high resolution video frames to be displayed by updating the contents of the previously generated high resolution video frame displayed with the contents of the currently received low resolution video frame at positions within the high resolution video frame to be displayed defined by a merge function dependent on the pixel position in the low resolution video frame and the size of the region.

The object of the invention is also a system for generating low resolution video frames to be displayed in a low resolution video display from a low resolution video stream transmitted according to the method of the invention, the system comprising a low resolution video stream decomposer configured to decompose an input low resolution video stream to low resolution video frames ; and a low resolution video frames generator configured to generate a low resolution video frame to be displayed comprising at least some pixels calculated as an average of corresponding pixels of previously received low resolution video frames.

The object of the invention is shown by means of exemplary embodiments on a drawing, in which:
Fig. 1 shows schematically a series of high resolution video frames converted to low resolution video frames,
Fig. 2 shows the steps of a method for transmitting a high resolution video stream as a low resolution video stream,
Fig. 3 shows schematically another series of high resolution video frames converted to low resolution video frames,
Fig. 4 shows schematically a series of low resolution video frames of Fig. 1 converted to high resolution video frames to be displayed,
Fig. 5 shows the steps of a method for generating a high resolution video stream to be displayed from a low resolution video stream,
Fig. 6 shows schematically a series of low resolution video frames of Fig. 3 converted to high resolution video frames to be displayed,
Fig. 7 shows the steps of a method for displaying the low resolution video stream in a low resolution display.
Fig. 8 shows schematically a series of low resolution video frames of Fig. 3 converted to low resolution video frames to be displayed.
Fig. 9 shows schematically the structure of a system for transmitting a high resolution video stream as a low resolution video stream,
Fig. 10 shows schematically the structure of a system for generating a high resolution video stream to be displayed from a low resolution video stream,
Fig. 11 shows schematically the structure of a system for generating low resolution video stream to be displayed from a low resolution video stream.

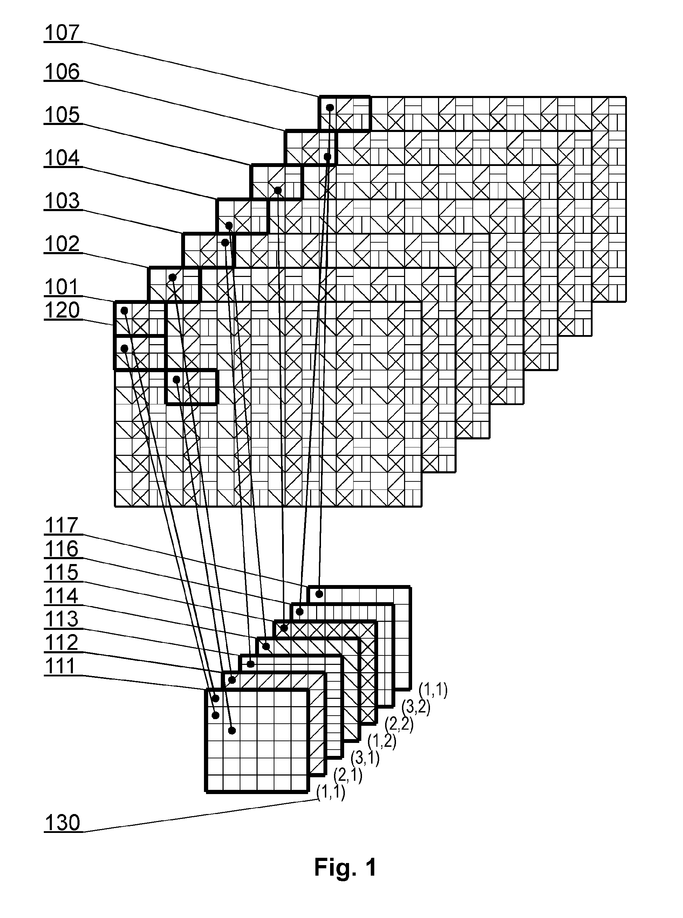

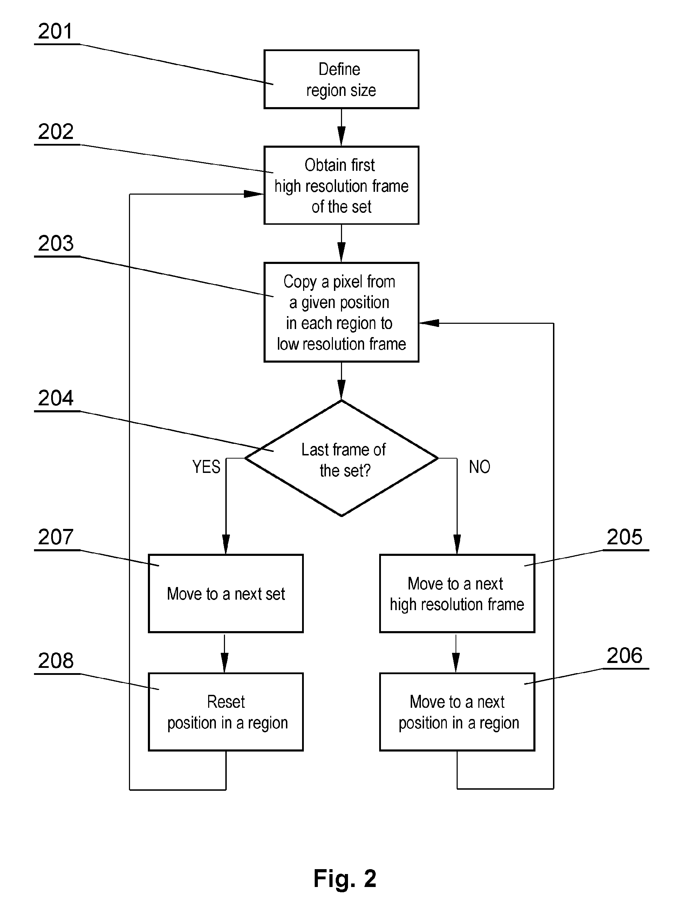

The process of transmitting a high resolution video stream comprising high resolution video frames 101-107 as low resolution video stream comprising low resolution video frames 111-117 will be explained first with reference to Figs. 1 and 2. First, the rate of scaling has to be determined in step 201 by determining the size of a region for dividing the high resolution video frames. The region size can be selected as having dimensions equal to the ratio of the dimensions of the high resolution video frame and the low resolution video frame rounded up. For example, in case a high resolution video stream with frames of size 1920x1080 pixels are to be converted to a low resolution video stream with frames of size 720x576 pixels, the following calculations is made:
- in the horizontal direction: 1920/720 = 2,7, region horizontal size = 3
- in the vertical direction: 1080/576 = 1,9, region vertical size = 2

Fig. 1 shows an exemplary series of high resolution video frames 101-107 divided into equally-sized adjacent regions 120 having a size of 3x2 pixels. Next, starting from step 202, the frames are processed in sets, wherein a set contains the number of frames equal to the number of pixels in a region 120, which in the present example equals 6. In step 202 the first high resolution video frame 101 of the set is received. In step 203, the first high resolution video frame 101 of the set is converted to a first low resolution video frame 111 by copying the first pixel of each region 120 to the first low resolution video frame 111 to a position defined by a split function dependent on the pixel position in the high resolution video frame 101 and the size of the region 120.

The split function may define the position of the pixel in the low resolution video frame 111-117 as the coordinates of the pixel in the high resolution video frame 101-107 divided by the size of the region 120 in a given coordinate direction and rounded up. For example, pixel having coordinates (4,5) in the high resolution video frame 101 will be copied to coordinates (4/3, 5/2) = (2, 3) in the low resolution video frame 111.

In the above example, when a high resolution video frame of 1920x1080 pixels is converted to low resolution video frames using regions of size 3x2 pixels, the resulting low resolution video frames will have a size of 640x540 pixels. In case these frames are to be transmitted as a standard resolution video frames of 720/576 pixels, the split function may position the converted pixels in the middle of the frame, i.e. add a shift value of ((720-640)/2), (576-540)/2) = (40,18) to each pixel, such that an empty frame surrounds the converted pixels. Frames converted in such a manner can be displayed as low resolution video frames in a way more convenient for the user.

In addition, a header 130 for the low resolution video frames 111-117 can be provided to define the position of the pixels of the particular low resolution video frame 111-117 in the region 120 of the high resolution video frame 101-107, i.e. an intra-region shift value. The header 130 allows easier reconstruction of the high resolution stream, although information about arrangement of pixels of the low resolution video frames in the region can be provided in an alternative manner, for example by a header added only to the first low resolution video frame of the set, or by an additional data stream, or can be set as a constant for a particular video transmission system.

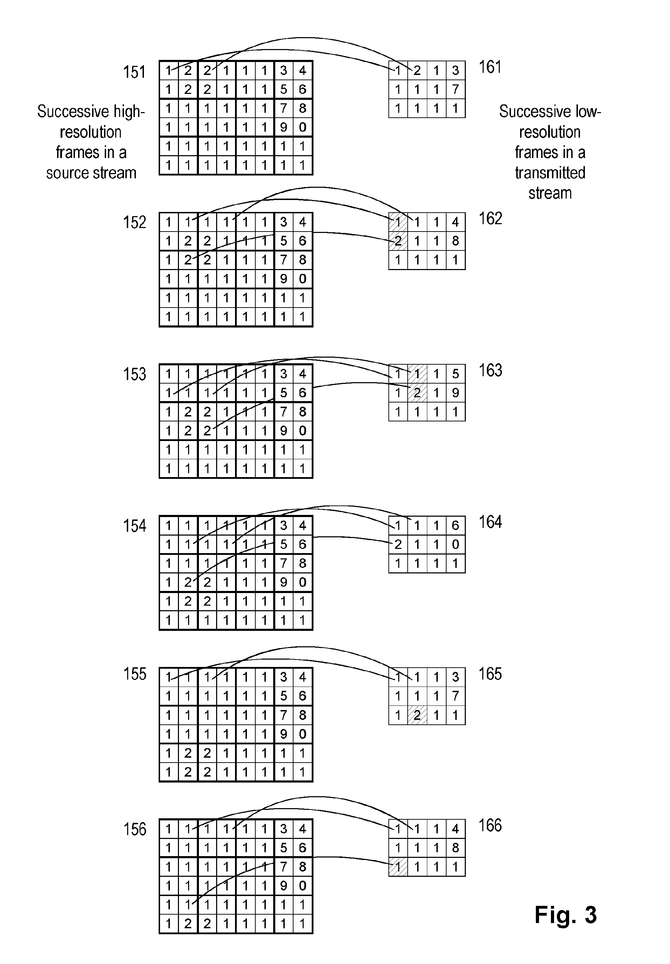

Furthermore, the low resolution video frames 111-117 may have embedded information about pixels of a moving object, whose value has changed between the high resolution video frame 101-107 from which the low resolution video frame 111-117 is converted and the previous high resolution video frame 101-107, as shown in the example of Fig. 3. Alternatively, information about pixels of a moving object can be provided in an additional bitmap mask image or as vector data in the frame header or in a separate data object, or as data contained in the unused portion of the low resolution video frame 111-117. This facilitates motion compensation and reduces artifacts during reconstruction of the stream. In another example of a high resolution video stream converted to a low resolution video stream as shown in Fig. 3, successive high resolution video frames 151-156 of a high resolution video stream are converted to low resolution video frames 161-166 of a low resolution video stream, according to the procedure explained above, wherein the region 120 has a size of 2x2 pixels. The numbers represent the value of each pixel. The pixels whose values change between successive high resolution video frames 151-156 are marked in the low resolution video frames 161-166 by hatching.

After the frame is converted in step 203, it is checked in step 204 whether this was the last frame of the set. If not, the procedure moves in step 205 to the next high resolution video frame 102-106 of the set to be converted to low resolution video frame 112-116, wherein the pixels of the next frame are copied from a next position within the region, the position being is updated in step 206. If the frame was the last frame of the set, the procedure moves to process the next set of frames in step 207, starting from the high resolution video frame 107 and the position in the region reset to the position of the first pixel within the region in step 208. The generated low resolution video frames can be then transmitted in a conventional manner using a typical transmission procedures for a series of low resolution video frames, such as combining the frames to a stream, coding, compressing, scrambling etc. The term "transmit" is to be understood as to send the generated low resolution video stream over a transmission medium, such as a broadcast channel or a dedicated point-to-point channel. The stream can be also transmitted, either locally within a signal generating device, or on a longer distance to another device, to a signal recording device in order to record the stream on a storage medium.

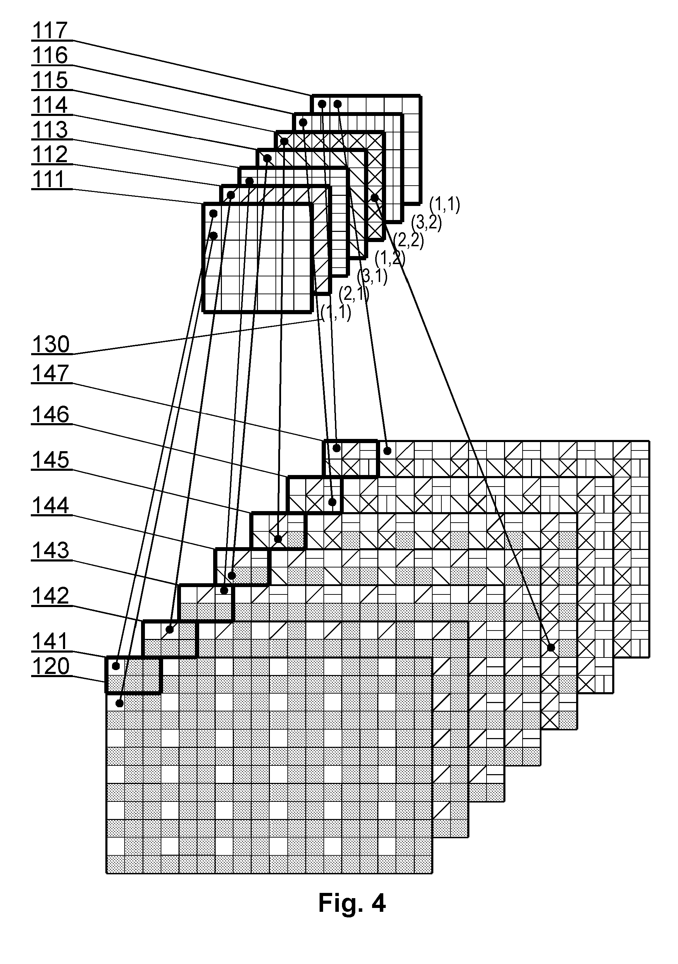

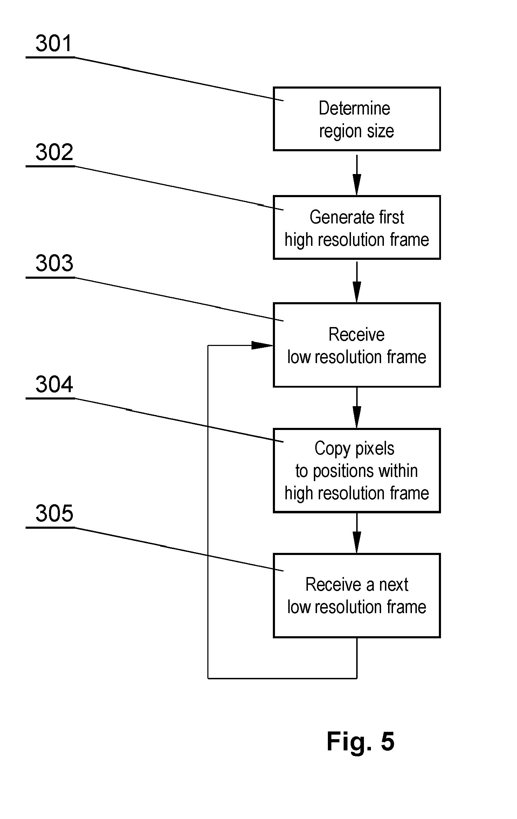

The process of reconstructing a high resolution video stream with high resolution video frames 141-147 from a low resolution video stream comprising low resolution video frames 111-117 transmitted according to the process explained with reference to Figs. 1 and 2, will be explained with reference to Figs. 4 and 5. First, the region size is determined in step 301. The region size can be provided in the header 130 of one or more of the low resolution video frames, in a separate data stream, or can be set as a constant for the particular video transmission system. Next, the first high resolution video frame is generated in step 302, the high resolution video frame having a size equal to substantially the size of the low resolution video frames multiplied by the region size. In case the low resolution video frames have inactive borders, as explained in the above example, only the active part of the low resolution video frames will be processed. A low resolution video frame 111-117 is received from the stream in step 303. The contents of the previously generated high resolution video frame are then, in step 304, updated with the contents of the currently received low resolution video frame 111-117 at positions within the high resolution video frame defined by a merge function. The merge function can define the position of the pixel in the high resolution video frame 141-147 as the coordinates of the pixel in the low resolution video frame 111-117, shifted by one leftwards and upwards, multiplied by the size of the region 120 in a given coordinate direction and supplemented by an intra-region shift value characteristic for the low resolution video frame 111-117. The intra-region shift value can be provided in the header 130 of each low resolution video frame, or can be calculated depending on the size of the region. For example, the pixel having coordinates (6,4) in the low resolution video frame 115 shown in Fig. 4 with intra-region shift value of (2,2) will be copied to position of coordinates ((6-1)*3+2, (4-1)*2+2) = (17,8). As shown in the example of Fig. 4, for 6 low resolution video frames, each high resolution frame has 1/6 of its contents updated with respect to the contents of the previous high resolution frame.

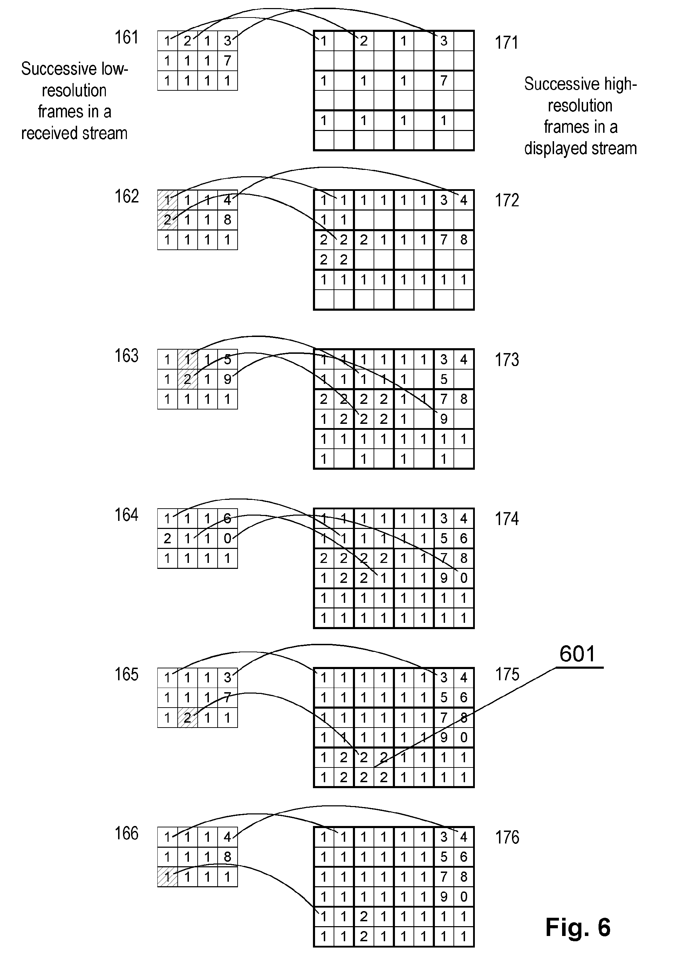

In case the low resolution video frame comprises information on pixels of a moving object, the contents of such pixels can be copied to all pixels belonging to the region 120 of the high resolution video frame corresponding to the pixel of a moving object, as shown in Fig. 6, showing reconstruction of the low resolution video frames 161-166 of Fig. 3 to high resolution video frames 171-176 to be displayed. For example, reference 601 indicates copying of the contents of a pixel indicated as a pixel of a moving object in the received low resolution video frame 165 to the whole region 120 within a high resolution video frame to be displayed 175. This results in that the moving objects are represented in the high resolution video frame in a low resolution, while the stationary objects are represented in a high resolution (as clearly seen in the top right corner of the high resolution video frames to be displayed 171-176, wherein exact values (3-9, 0) of all pixels in the high resolution video frames are reconstructed). Therefore, as shown in the example of Fig. 6, for 4 low resolution video frames, each high resolution frame has at least 1/4 of its contents updated with respect to the contents of the previous high resolution frame. The amount of update is higher for higher amount of pixels of a moving object, which cause update of more than one pixel contents.

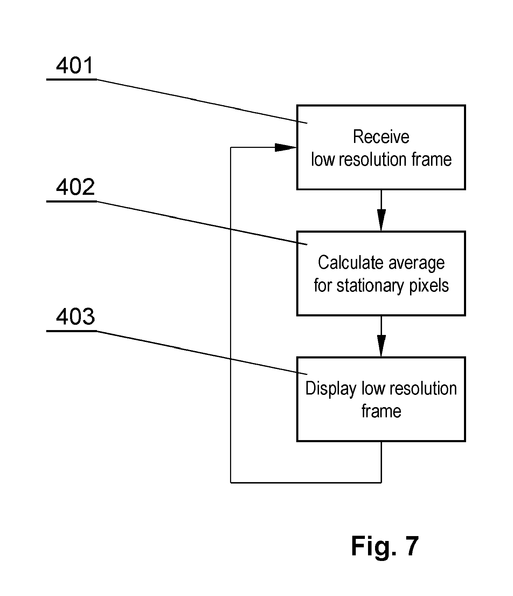

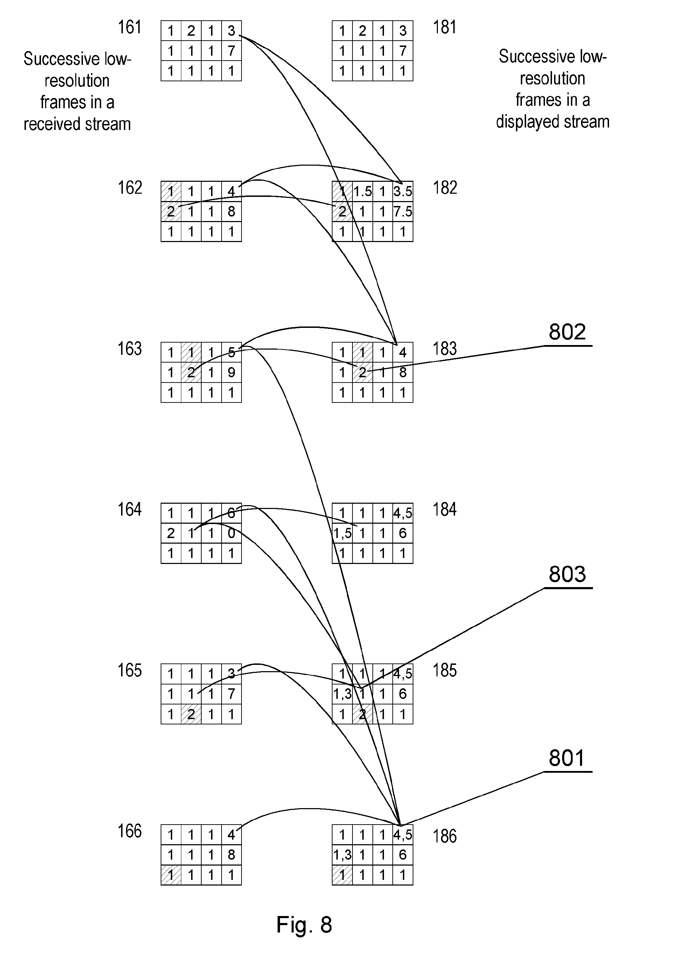

Fig. 7 shows the steps of a method for displaying the low resolution video stream 161-166 in a low resolution display and Fig. 8 shows a corresponding low resolution video frames 181-186 to be displayed as reconstructed from the low resolution video frames 161-166 generated as shown in Fig. 3. First, in step 401, a low resolution video frame 161-166 is received. Individual pixels of consecutive low resolution video frames comprise contents of neighboring pixels of high resolution video frames, which when displayed directly would cause trembling of the image. Therefore, for each pixel of the frame to be displayed, an average can be calculated in step 402, the average related to the values of that pixel in previous frames. For pixels, which have not been classified as pixels of a moving object within the last n frames, where n is the size of the set, e.g. 4, the average of pixel values in the last n frames is calculated, as indicated by reference 801. For pixels which are indicated as pixels of a moving object, the value of the pixel to be displayed is directly copied from the currently received low resolution video frame, as indicated by reference 802. For pixels, which have been classified as pixels of a moving object within the last n frames, where n is the size of the set, e.g. 4, the average of pixel value of all last frames after the pixel was classified as the pixel of a moving object is calculated, as indicated by reference 803. This guarantees that movement of objects will not be slowed down and minimizes shading. Then, in step 403, the average value or the direct value of the pixel is set as a value of the pixel of the low resolution video frame 171-176 to be displayed.

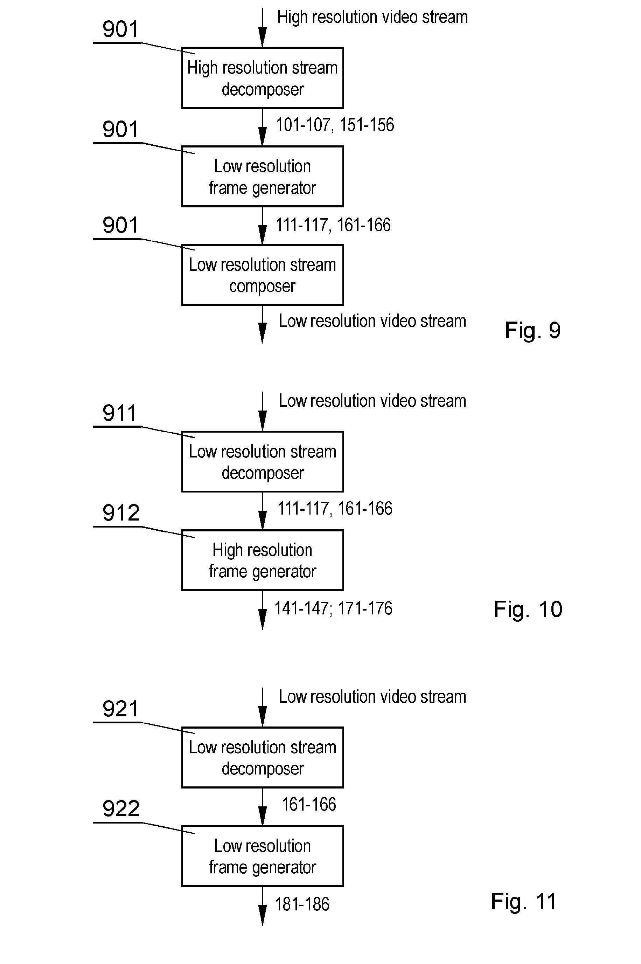

Fig. 9 shows schematically the structure of a system for transmitting a high resolution video stream as a low resolution video stream, configured to operate according to the method described with reference to Fig. 2. The system comprises a high resolution video stream decomposer 901 configured to decompose an input high resolution video stream to high resolution video frames 101-107, 151-156. The decomposed frames are input to a frame converter 902 configured to define a size of a region 120 for dividing the high resolution video frames 101-107, 151-156 into equally-sized adjacent regions 120, process the high resolution video frames 101-107, 151-156 in sets 101-106, 151-154, each set containing a number of frames equal to the number of pixels within the region 120. Within the set 101-106, 151-154 the frame converter is configured to convert the first high resolution video frame 101, 151 of the set to a first low resolution video frame 111, 161 by copying the first pixel of each region 120 to the first low resolution video frame 111, 161 to a position defined by a split function dependent on the pixel position in the high resolution video frame 101, 151 and the size of the region 120, convert the next high resolution video frame 102-106, 152-154 of the set to a next low resolution video frame 112-116, 162-164 by copying the next pixel of each region 120 to the next low resolution video frame 112-116, 162-164 to a position defined by the split function, until all high resolution video frames of the set 101-106, 151-154 are converted to low resolution video frames 111-116, 161-164, and to perform at least some of the other actions in accordance with steps 202-206 of the method of Fig. 2. The generated low resolution video frames are input to a low resolution video stream composer 903 configured to combine the low resolution video frames 111-117, 161-166 to the low resolution video stream and to transmit the low resolution video stream over a transmission channel adapted for the low resolution video stream format.

Fig. 10 shows schematically the structure of a system for generating a high resolution video stream to be displayed from a low resolution video stream, which operates according to the method of Fig. 5. The system comprises a low resolution video stream decomposer 911 configured to decompose an input low resolution video stream to low resolution video frames 111-117, 161-166. The low resolution video frames are input to a high resolution video frames generator 912 configured to determine the size of the region 120 and generate successive high resolution video frames to be displayed 141-147, 171-176 by updating the contents of the previously generated high resolution video frame displayed 141-147, 171-176 with the contents of the currently received low resolution video frame 111-117, 161-166 at positions within the high resolution video frame to be displayed 141-147, 171-176 defined by a merge function dependent on the pixel position in the low resolution video frame 111-117, 161-166 and the size of the region 120, and to perform at least some of the other actions according to steps 302-305 of the method of Fig. 5. The generated high resolution video frames can be next passed to a high resolution video display unit.

Fig. 11 shows schematically the structure of a system for generating low resolution video stream to be displayed from a low resolution video stream, operating according to the method of Fig. 7. The system comprises a low resolution video stream decomposer 921 configured to decompose an input low resolution video stream to low resolution video frames 161-166. The low resolution video frames are passed to a low resolution video frames generator 922 configured to generate a low resolution video frame to be displayed 181-186 comprising at least some pixels 801, 803 calculated as an average of corresponding pixels of previously received low resolution video frames 181-186 and to perform at least some of the other actions in accordance with steps 401-403 of the method of Fig. 7. The low resolution video frames to be displayed can be next passed to a low resolution video display unit.

The method according to the invention allows transmitting high resolution video streams over a transmission channel adapted to low resolution video streams. The generated low resolution video stream can be reconstructed to a high resolution video stream, in which stationary objects have a high resolution and moving objects have a low resolution. Alternatively, the low resolution video stream can be displayed in its low resolution form. The method can be used to transmit high definition video streams over transmission networks adapted to standard resolution video streams. The method can be also used for other applications, such as closed-circuit television systems, wherein video streams from a large number of security cameras have to be transmitted over low bandwidth channels.

The methods and systems as described above can be implemented in a computer system, and performed or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for transmitting a high resolution video stream comprising high resolution video frames (101-107, 151-156) as low resolution video stream comprising low resolution video frames (111-117,161-166), comprising the steps of:
- defining a size of a region (120) for dividing the high resolution video frames (101-107, 151-156) into equally-sized adjacent regions (120),
- processing the high resolution video frames (101-107, 151-156) in sets (101-106, 151-154), each set containing a number of frames equal to the number of pixels within the region (120), wherein within the set (101-106, 151-154):
o converting the first high resolution video frame (101, 151) of the set to a first low resolution video frame (111, 161) by copying the first pixel of each region (120) to the first low resolution video frame (111, 161) to a position defined by a split function dependent on the pixel position in the high resolution video frame (101, 151) and the size of the region (120),
o converting the next high resolution video frame (102-106, 152-154) of the set to a next low resolution video frame (112-116, 162-164) by copying the next pixel of each region (120) to the next low resolution video frame (112-116, 162-164) to a position defined by the split function,
o until all high resolution video frames of the set (101-106, 151-154) are converted to low resolution video frames (111-116, 161-164),
- transmitting the low resolution video stream comprising the low resolution video frames (111-117, 161-166) as a representation of the high resolution video stream comprising the high resolution video frames (101-107, 151-156).

2. The method according to claim 1, wherein the split function defines the position of the pixel in the low resolution video frame (111-117, 161-166) as the coordinates of the pixel in the high resolution video frame (101-107, 151-156) divided by the size of the region (120) in a given coordinate direction and rounded up.

3. The method according to claim 2, wherein the split function further adds a shift value to each calculated coordinate of the pixel.

4. The method according to any of previous claims, further comprising the step of providing a header (130) for the low resolution video frames (111-117, 161-166), the header (130) comprising an intra-region shift value defining the position of the pixels of the particular low resolution video frame (111-117, 161-166) in the regions (120) of the high resolution video frame (101-107, 151-156).

5. The method according to any of previous claims, further comprising the step of providing information about pixels of a moving object, whose value has changed between the high resolution video frame (101-107, 151-156) from which the low resolution video frame (111-117, 161-166) is converted and the previous high resolution video frame (101-107, 151-156).

6. A method for generating a high resolution video stream to be displayed from a low resolution video stream transmitted according to the method of claim 1, comprising the steps of:
- determining the size of the region (120),
- receiving successive low resolution video frames (111-117, 161-166),
- generating successive high resolution video frames to be displayed (141-147, 171-176) by updating the contents of the previously generated high resolution video frame displayed (141-147, 171-176) with the contents of the currently received low resolution video frame (111-117, 161-166) at positions within the high resolution video frame to be displayed (141-147, 171-176) defined by a merge function dependent on the pixel position in the low resolution video frame (111-117, 161-166) and the size of the region (120).

7. The method according to claim 6, wherein the merge function defines the position of the pixel in the high resolution video frame to be displayed (141-147, 171-176) as the shifted coordinates of the pixel in the low resolution video frame (111-117, 161-166) multiplied by the size of the region (120) in a given coordinate direction and supplemented by an intra-region shift value.

8. The method according to claim 7, wherein the intra-region shift value is read from a header (130) of the low resolution video frame (111-117, 161-166), the header (130) defining the position of the pixels of the particular low resolution video frame in the regions (120) of the high resolution video frame to be displayed (141-147, 171-176).

9. The method according to claim 6, further comprising the step of determining whether the pixel of the low resolution video frame (161-166) is a pixel of a moving object and if so, updating the contents of all pixels belonging to the region (120) of the high resolution video frame to be displayed (171-176) corresponding to the pixel of a moving object with the content of the pixel of a moving object.

10. A method for generating low resolution video frames to be displayed in a low resolution video display from a low resolution video stream transmitted according to the method of claim 1, comprising the steps of:
- receiving consecutive low resolution video frames (161-166),
- generating a low resolution video frame to be displayed (181-186) comprising at least some pixels (801, 803) calculated as an average of corresponding pixels of previously received low resolution video frames (181-186).

11. The method according to claim 10, further comprising the step of generating a low resolution video frame to be displayed (181-186) comprising at least some pixels (802) copied directly from the received low resolution video frame (161-166) for pixels marked as pixels of a moving object.

12. A computer program comprising program code means for performing all the steps of the method according to any of claims 1-11 when said program is run on a computer.

13. A system for transmitting a high resolution video stream comprising high resolution video frames (101-107, 151-156) as low resolution video stream comprising low resolution video frames (111-117,161-166), comprising:
- a high resolution video stream decomposer (901) configured to decompose an input high resolution video stream to high resolution video frames (101-107, 151-156),
- a frame converter (902) configured to:
- define a size of a region (120) for dividing the high resolution video frames (101-107, 151-156) into equally-sized adjacent regions (120),
- process the high resolution video frames (101-107, 151-156) in sets (101-106, 151-154), each set containing a number of frames equal to the number of pixels within the region (120), wherein within the set (101-106, 151-154) the frame converter is configured to:
- convert the first high resolution video frame (101, 151) of the set to a first low resolution video frame (111, 161) by copying the first pixel of each region (120) to the first low resolution video frame (111, 161) to a position defined by a split function dependent on the pixel position in the high resolution video frame (101, 151) and the size of the region (120),
- convert the next high resolution video frame (102-106, 152-154) of the set to a next low resolution video frame (112-116, 162-164) by copying the next pixel of each region (120) to the next low resolution video frame (112-116, 162-164) to a position defined by the split function,
- until all high resolution video frames of the set (101-106, 151-154) are converted to low resolution video frames (111-116, 161-164)
- a low resolution video stream composer (903) configured to combine the low resolution video frames (111-117, 161-166) to the low resolution video stream and to transmit the low resolution video stream over a transmission channel adapted for the low resolution video stream format.

14. A system for generating a high resolution video stream to be displayed from a low resolution video stream transmitted according to the method of claim 1, the system comprising:
- a low resolution video stream decomposer (911) configured to decompose an input low resolution video stream to low resolution video frames (111-117, 161-166),
- a high resolution video frames generator (912) configured to:
- determine the size of the region (120),
- generate successive high resolution video frames to be displayed (141-147, 171-176) by updating the contents of the previously generated high resolution video frame displayed (141-147, 171-176) with the contents of the currently received low resolution video frame (111-117, 161-166) at positions within the high resolution video frame to be displayed (141-147, 171-176) defined by a merge function dependent on the pixel position in the low resolution video frame (111-117, 161-166) and the size of the region (120).

15. A system for generating low resolution video frames to be displayed in a low resolution video display from a low resolution video stream transmitted according to the method of claim 1, the system comprising:
- a low resolution video stream decomposer (921) configured to decompose an input low resolution video stream to low resolution video frames (161-166),
- a low resolution video frames generator (922) configured to generate a low resolution video frame to be displayed (181-186) comprising at least some pixels (801, 803) calculated as an average of corresponding pixels of previously received low resolution video frames (181-186).
